# EUROPÄISCHE PATENTSCHRIFT

(11) **EP 3 634 823 B1**
(45) Veröffentlichungstag und Bekanntmachung des Hinweises auf die Patenterteilung: **17.03.2021**
(21) Anmeldenummer: 18739798.9
(22) Anmeldetag: 03.07.2018
(51) Int. Cl.: B60T 17/22, B60L 15/20, B60L 3/00, B60T 13/66

(54) **VORRICHTUNG MIT EINER ANTRIEBSSTEUEREINRICHTUNG, FAHRZEUG MIT EINER DERARTIGEN VORRICHTUNG UND VERFAHREN ZUM BETREIBEN EINER ANTRIEBSSTEUEREINRICHTUNG**
DEVICE HAVING A DRIVE CONTROL UNIT, VEHICLE HAVING SUCH A DEVICE AND METHOD FOR OPERATING A DRIVE CONTROL UNIT
DISPOSITIF COMPRENANT UN MOYEN DE COMMANDE D'ENTRAÎNEMENT, VÉHICULE COMPRENANT UN TEL DISPOSITIF ET PROCÉDÉ DE FONCTIONNEMENT D'UN MOYEN DE COMMANDE D'ENTRAÎNEMENT

(30) Priorität: 31.07.2017 DE 102017213149
(43) Veröffentlichungstag der Anmeldung: 15.04.2020
(73) Patentinhaber: Siemens Mobility GmbH, 81739 München (DE)
(72) Erfinder: GREILICH, Murad, 91056 Erlangen (DE)
(86) Internationale Anmeldenummer: PCT/EP2018/067897
(87) Internationale Veröffentlichungsnummer: WO 2019/025103

(56) Entgegenhaltungen:
- WO-A1-2016/134964
- DE-A1-102005 045 603
- DE-A1-102008 018 873

## Beschreibung

Es ist bekannt, dass konventionell bei einem Fahrzeug, insbesondere bei einem Schienenfahrzeug, bei dem elektrische Antriebseinrichtungen ein elektrisches Antriebssystem bilden, welches bei entsprechender Ansteuerung in einem Bremsbetrieb eine Bremswirkung auf das Fahrzeug entfaltet, zusätzlich ein Reibungsbremssystem zum Abbremsen des Fahrzeugs vorgesehen ist. Dabei wird das elektrische Antriebssystem als Teil einer sogenannten Betriebsbremse des Fahrzeugs - also bei einer Betriebsbremsung - betrieblich zum Abbremsen des Fahrzeugs genutzt. Das elektrische Antriebssystem wird jedoch konventionell nicht als Teil einer sogenannten Schnellbremse - also nicht bei einer Schnellbremsung - zum Abbremsen des Fahrzeugs in Gefahrensituationen genutzt, da hinsichtlich der jeweiligen Bremswirkung dem Reibungsbremssystem ein höheres Sicherheitsniveau zugeschrieben wird, als dem elektrischen Antriebssystem.

Aus der Druckschrift WO 2016/134964 A1 ist ein Fahrzeug mit einer einen oder mehrere elektrische Motoren aufweisenden Antriebseinrichtung (dort kurz als Antrieb bezeichnet) und mit einer mit der Antriebseinrichtung in Verbindung stehenden und diese ansteuernden Antriebssteuereinrichtung bekannt. Unabhängig davon, ob die Antriebssteuereinrichtung die Antriebseinrichtung aktiv betreibt, wenn ein Schnellbremssignal eine Schnellbremsung anzeigt, ist zur Gewährleistung eines hohen Sicherheitsniveaus vorgesehen, dass die Antriebseinrichtung von einer Energieversorgungseinrichtung des Fahrzeugs getrennt und damit abgeschaltet wird, wenn neben dem Schnellbremssignal gleichzeitig angezeigt ist, dass die Antriebseinrichtung das Fahrzeug in Summe nicht abbremst sondern antreibt.

Die Erfindung geht aus von einer Vorrichtung mit einer Antriebssteuereinrichtung, welche zur Steuerung einer einen oder mehrere elektrische Motoren aufweisenden Antriebseinrichtung eines Fahrzeugs geeignet ausgebildet ist (WO 2016/134964 A1).

Der Erfindung liegt die Aufgabe zu Grunde, den Betrieb der Antriebssteuereinrichtung sicherer zu gestalten, insbesondere um diese und die von ihr angesteuerte Antriebseinrichtung auch bei einer Schnellbremsung sicher einsetzen zu können; um also bei deren Einsatz als Teil der Schnellbremse eines Fahrzeugs einer dafür geforderten hohen Sicherheitsanforderung genügen zu können.

Diese Aufgabe wird erfindungsgemäß durch eine Vorrichtung mit den Merkmalen des Patentanspruches 1 gelöst. Vorteilhafte Ausgestaltungen der erfindungsgemäßen Vorrichtung sind in Unteransprüchen angegeben.

Danach ist erfindungsgemäß eine Überwachungseinrichtung vorgesehen, welche geeignet ausgebildet ist, ein Abschalten der Antriebssteuereinrichtung zu verhindern, wenn ihr, insbesondere mittels anliegenden Anforderungssignalen, angezeigt ist, dass neben einer antriebssteuerunabhängig aktivierten Abschaltanforderung eine antriebssteuerabhängig aktivierte Einschaltanforderung vorliegt.

Im Rahmen der Erfindung wird unter einer antriebssteuerunabhängig aktivierten Abschaltanforderung eine Anforderung zum Abschalten der Antriebssteuereinrichtung verstanden, welche unabhängig von der Antriebssteuereinrichtung aktivierbar bzw. aktiviert ist. Außerdem wird im Rahmen der Erfindung unter einer antriebssteuerabhängig aktivierten Einschaltanforderung eine Anforderung zum Einschalten der Antriebssteuereinrichtung verstanden, welche von der Antriebssteuereinrichtung aktivierbar bzw. aktiviert ist.

Ein wesentlicher Vorteil der erfindungsgemäßen Vorrichtung ist darin zu sehen, dass bei dieser die Antriebssteuereinrichtung durch die antriebssteuerabhängig aktivierte Einschaltanforderung - also durch die von ihr aktivierte Anforderung zum Einschalten der Antriebssteuereinrichtung - selbst bewirken kann, nicht zu einer Unzeit, beispielsweise zum Zeitpunkt einer Schnellbremsung, abgeschaltet zu werden. Die Antriebssteuereinrichtung kann sich also ihren eingeschalteten Zustand selbst erhalten. Die erfindungsgemäße Vorrichtung gewährleistet damit lokal mit einem hohen Sicherheitsniveau die Betriebsbereitschaft ihrer Antriebssteuereinrichtung. Die antriebssteuerunabhängig aktivierte Abschaltanforderung - also die unabhängig von der Antriebssteuereinrichtung aktivierte Anforderung zum Abschalten der Antriebssteuereinrichtung - kann vorzugsweise zentral, beispielsweise an ein zentrales Steuergerät ausgelagert, bereitgestellt werden.

Vorzugsweise ist die Überwachungseinrichtung geeignet ausgebildet, das Abschalten der Antriebssteuereinrichtung zu bewirken, wenn ihr, insbesondere mittels der Anforderungssignale, angezeigt ist, dass neben der antriebssteuerunabhängig aktivierten Abschaltanforderung anstelle der antriebssteuerabhängig aktivierten Einschaltanforderung eine antriebssteuerabhängig aktivierte Abschaltanforderung vorliegt. Im Rahmen der Erfindung wird unter einer antriebssteuerabhängig aktivierten Abschaltanforderung eine Anforderung zum Abschalten der Antriebssteuereinrichtung verstanden, welche von der Antriebssteuereinrichtung aktivierbar bzw. aktiviert ist. - Auch das Abschalten wird also letztendlich lokal durch die erfindungsgemäße Vorrichtung gewährleistet.

Es wird als vorteilhaft angesehen, wenn die Überwachungseinrichtung einen ersten Signaleingang aufweist, an dem ein erstes Anforderungssignal der Anforderungssignale anliegt, wobei im Falle des Vorliegens der antriebssteuerunabhängig aktivierten Abschaltanforderung, diese der Überwachungseinrichtung durch das erste Anforderungssignal, insbesondere in Form eines Signalwertes seiner Signalwerte, angezeigt ist und die Überwachungseinrichtung einen zweiten Signaleingang aufweist, an dem ein zweites Anforderungssignal der Anforderungssignale anliegt, wobei im Falle des Vorliegens der antriebssteuerabhängig aktivierten Einschaltanforderung, diese der Überwachungseinrichtung durch das zweite Anforderungssignal, insbesondere in Form eines Signalwertes seiner Signalwerte, angezeigt ist.

Außerdem wird es als vorteilhaft angesehen, wenn im Falle des Vorliegens der antriebssteuerabhängig aktivierten Abschaltanforderung, diese der Überwachungseinrichtung durch das zweite Anforderungssignal, insbesondere in Form eines anderen Signalwertes seiner Signalwerte, angezeigt ist. Im Rahmen der Erfindung wird unter einer antriebssteuerabhängig aktivierten Abschaltanforderung eine Anforderung zum Abschalten der Antriebssteuereinrichtung verstanden, welche abhängig von der Antriebssteuereinrichtung aktivierbar bzw. aktiviert ist.

Weiterhin ist es vorteilhaft, wenn im Falle des Vorliegens einer antriebssteuerunabhängig aktivierten Einschaltanforderung, diese der Überwachungseinrichtung durch das erste Anforderungssignal, insbesondere in Form eines anderen Signalwertes seiner Signalwerte, anzeigt ist. Im Rahmen der Erfindung wird unter einer antriebssteuerunabhängig aktivierten Einschaltanforderung eine Anforderung zum Einschalten der Antriebssteuereinrichtung verstanden, welche unabhängig von der Antriebssteuereinrichtung aktivierbar bzw. aktiviert ist.

Soll eine lokale Anordnung, bestehend aus der erfindungsgemäßen Vorrichtung und der durch deren Antriebssteuereinrichtung angesteuerten Antriebseinrichtung als Teil der Schnellbremse eines Fahrzeugs eingesetzt werden, so muss diese besonders hohen Sicherheitsanforderungen genügen. Um dies zu gewährleisten wird es als vorteilhaft angesehen, wenn die Antriebssteuereinrichtung einerseits geeignet ausgebildet ist, ihre Einschaltanforderung zu aktivieren, wenn ihr, insbesondere durch einen Schnellbremssignalwert eines anliegenden Schnellbremssignals oder durch eine mit einem Datenpacket empfangene Schnellbremsinformation, eine Schnellbremsanforderung angezeigt ist, und andererseits geeignet ausgebildet ist, anstelle ihrer Einschaltanforderung ihre Abschaltanforderung zu aktivieren, wenn ihr die Schnellbremsanforderung nicht angezeigt ist.

Es wird ferner als vorteilhaft angesehen, wenn die Überwachungseinrichtung geeignet ausgebildet ist, durch das Abschalten der Antriebssteuereinrichtung diese von einem Energieversorgungseinrichtung des Fahrzeugs zu trennen und hierzu einen Versorgungspfad mit eingangsseitigem Anschlusspunkt zu der Energieversorgungseinrichtung und ausgangsseitigem Anschlusspunkt zu der Antriebssteuereinrichtung sowie zwei im Zuge des Versorgungspfades parallel geschaltete Schalteinheiten aufweist, sodass der Versorgungspfad unterbrochen ist, wenn beide Schalteinheiten geöffnet sind, und geschlossen ist, wenn zumindest eine der beiden Schalteinheiten geschlossen ist, wobei eine erste Schalteinheit der beiden Schalteinheiten unter Einwirkung des ersten Anforderungssignals geöffnet ist, wenn mittels des ersten Anforderungssignals die antriebssteuerunabhängig aktivierte Abschaltanforderung angezeigt ist, und geschlossen ist, wenn mittels des ersten Anforderungssignals eine antriebssteuerunabhängig aktivierte Einschaltanforderung angezeigt ist, und wobei die zweite Schalteinheit der beiden Schalteinheiten unter Einwirkung des zweiten Anforderungssignals geschlossen ist, wenn mittels des zweite Anforderungssignals die antriebssteuerabhängig aktivierte Einschaltanforderung angezeigt ist, und geöffnet ist, wenn mittels des zweiten Anforderungssignals die antriebssteuerabhängig aktivierte Abschaltanforderung, angezeigt ist.

Vorzugsweise ist der eingangsseitige Anschlusspunkt des Versorgungspfades über eine elektrische Verbindung mit einem Spannungspol einer Batterie der Energieversorgungseinrichtung verbunden, so dass am eingangsseitigen Anschlusspunkt eine Eingangsspannung anliegt, die bei geschlossenem Versorgungspfad am ausgangsseitigen Anschlusspunkt bereitgestellt ist.

Es ist außerdem vorteilhaft, wenn einzelne Komponenten der Antriebssteuereinrichtung über weitere elektrische Verbindungen mit dem ausgangsseitigen Anschlusspunkt des Versorgungspfades verbunden sind. Im Zuge zumindest einer der weiteren Verbindungen kann eine Spannungsversorgungseinheit vorgesehen sein, welche die bereitgestellte Eingangsspannung in zumindest eine Ausgangsspannung umsetz, wobei die Werte von der Eingangsspannung und der zumindest einen Ausgangsspannung auch gleich sein können.

Vorzugsweise weist die Antriebssteuereinrichtung eine Steuereinheit und eine mit einem Signalausgang zur Überwachungseinrichtung versehene Ausgabeeinheit auf, wobei die Steuereinheit geeignet ausgebildet ist, die antriebssteuerabhängig aktivierte Einschaltanforderung zu aktivieren und an die Ausgabeeinheit auszugeben, wenn ihr die Schnellbremsanforderung angezeigt ist, und wobei die Ausgabeeinheit geeignet ausgebildet ist, die antriebssteuerabhängig aktivierte Einschaltanforderung in das zweite Anforderungssignal derart umzusetzen und an ihrem Signalausgang an die Überwachungseinrichtung auszugeben, dass dieser die antriebssteuerabhängig aktivierte Einschaltanforderung durch das zweite Anforderungssignal, insbesondere in Form des Signalwertes, angezeigt ist.

Die Erfindung betrifft auch ein Fahrzeug, insbesondere Schienenfahrzeug, mit zumindest einer einen oder mehrere elektrische Motoren aufweisenden Antriebseinrichtung und mit einer erfindungsgemäßen Vorrichtung, welche eine Antriebssteuereinrichtung zur Steuerung der zumindest einen Antriebseinrichtung aufweist. - Die antriebssteuerunabhängige Abschaltanforderung kann von zentraler Stelle, insbesondere von einer zentralen Zugsteuereinrichtung des Fahrzeugs, aktiviert werden.

Die Erfindung bezieht sich darüber hinaus auf ein Verfahren zum Betreiben einer Antriebssteuereinrichtung, welche zur Steuerung einer einen oder mehrere elektrische Motoren aufweisenden Antriebseinrichtung eines Fahrzeugs geeignet ausgebildet ist.

Erfindungsgemäß ist bezüglich eines solchen Verfahrens vorgesehen, dass eine Überwachungseinrichtung ein Abschalten der Antriebssteuereinrichtung verhindert, wenn ihr, insbesondere mittels anliegenden Anforderungssignalen, angezeigt ist, dass neben einer antriebssteuerunabhängig aktivierten Abschaltanforderung eine antriebssteuerabhängig aktivierte Einschaltanforderung vorliegt.

Bezüglich der Vorteile des erfindungsgemäßen Verfahrens sei auf die obigen Ausführungen im Zusammenhang mit der erfindungsgemäßen Vorrichtung verwiesen, da die Vorteile des erfindungsgemäßen Verfahrens denen der erfindungsgemäßen Vorrichtung im Wesentlichen entsprechen.

In Analogie zu der erfindungsgemäßen Vorrichtung wird es bei dem erfindungsgemäßen Verfahren als vorteilhaft angesehen, dass die Überwachungseinrichtung das Abschalten der Antriebssteuereinrichtung bewirkt, wenn ihr, insbesondere mittels der Anforderungssignale, angezeigt ist, dass neben der antriebssteuerunabhängig aktivierten Abschaltanforderung anstelle der antriebssteuerabhängig aktivierten Einschaltanforderung eine antriebssteuerabhängig aktivierte Abschaltanforderung vorliegt.

Dabei ist es vorteilhaft, wenn an einem ersten Signaleingang der Überwachungseinrichtung ein erstes Anforderungssignal der Anforderungssignale angelegt wird, wobei im Falle des Vorliegens der antriebssteuerunabhängig aktivierten Abschaltanforderung, diese der Überwachungseinrichtung durch das erste Anforderungssignal, insbesondere in Form eines Signalwertes seiner Signalwerte, angezeigt wird, und wenn an einem zweiten Signaleingang der Überwachungseinrichtung ein zweites Anforderungssignal der Anforderungssignale angelegt wird, wobei im Falle des Vorliegens der antriebssteuerabhängig aktivierten Einschaltanforderung, diese der Überwachungseinrichtung durch das zweite Anforderungssignal, insbesondere in Form eines Signalwertes seiner Signalwerte, angezeigt wird.

Außerdem ist es vorteilhaft, wenn im Falle des Vorliegens der antriebssteuerabhängig aktivierten Abschaltanforderung, diese der Überwachungseinrichtung durch das zweite Anforderungssignal, insbesondere in Form eines anderen Signalwertes seiner Signalwerte, angezeigt wird.

Bevorzugt ist vorgesehen, dass die Antriebssteuereinrichtung ihre Einschaltanforderung aktiviert, wenn ihr, insbesondere durch einen Schnellbremssignalwert eines anliegenden Schnellbremssignals oder durch eine mit einem Datenpacket empfangene Schnellbremsinformation, eine Schnellbremsanforderung angezeigt wird, und dass die Antriebssteuereinrichtung anstelle ihrer Einschaltanforderung ihre Abschaltanforderung aktiviert, wenn ihr die Schnellbremsanforderung nicht angezeigt wird.

Es ist vorteilhaft, wenn die Überwachungseinrichtung durch das Abschalten der Antriebssteuereinrichtung diese von einem Energieversorgungseinrichtung des Fahrzeugs trennt und hierzu einen Versorgungspfad mit eingangsseitigem Anschlusspunkt zu der Energieversorgungseinrichtung und ausgangsseitigem Anschlusspunkt zu der Antriebssteuereinrichtung sowie zwei im Zuge des Versorgungspfades parallel geschaltete Schalteinheiten aufweist, sodass der Versorgungspfad unterbrochen wird, wenn beide Schalteinheiten geöffnet werden, und geschlossen wird, wenn zumindest eine der beiden Schalteinheiten geschlossen wird, wobei eine erste Schalteinheit der beiden Schalteinheiten unter Einwirkung des ersten Anforderungssignals geöffnet wird, wenn mittels des ersten Anforderungssignals die antriebssteuerunabhängig aktivierte Abschaltanforderung anzeigt wird, und geschlossen wird, wenn mittels des ersten Anforderungssignals die antriebssteuerunabhängig aktivierte Einschaltanforderung angezeigt wird, und wobei die zweite Schalteinheit der beiden Schalteinheiten unter Einwirkung des zweiten Anforderungssignals geschlossen wird, wenn mittels des zweite Anforderungssignals die antriebssteuerabhängig aktivierte Einschaltanforderung angezeigt wird, und geöffnet wird, wenn mittels des zweiten Anforderungssignals die antriebssteuerabhängig aktivierte Abschaltanforderung, angezeigt wird.

Auch wird es als vorteilhaft angesehen, dass eine Steuereinheit der Antriebssteuereinrichtung die antriebssteuerabhängig aktivierte Einschaltanforderung aktiviert und an eine mit einem Signalausgang zur Überwachungseinrichtung versehene Ausgabeeinheit der Antriebssteuereinrichtung ausgibt, wenn ihr die Schnellbremsanforderung angezeigt wird, und dass die Ausgabeeinheit die antriebssteuerabhängig aktivierte Einschaltanforderung in das zweite Anforderungssignal derart umsetzt und an ihrem Signalausgang an die Überwachungseinrichtung ausgibt, dass dieser die antriebssteuerabhängig aktivierte Einschaltanforderung durch das zweite Anforderungssignal, insbesondere in Form des Signalwertes, angezeigt wird.

Die Erfindung wird nachfolgend anhand eines Ausführungsbeispiels näher erläutert; dabei zeigen
- Figur 1: ein erfindungsgemäßes Fahrzeug in Form eines Schienenfahrzeugs mit lokalen Anordnungen zur Traktion des Fahrzeugs, wobei jede der lokalen Anordnungen jeweils einem Triebdrehgestell des Fahrzeugs zugeordnet ist und neben einer Antriebseinrichtung eine erfindungsgemäße Vorrichtung aufweist, und
- Figur 2: eines der Triebdrehgestelle mit der ihm zugeordneten lokalen Anordnung aus der Figur 1.

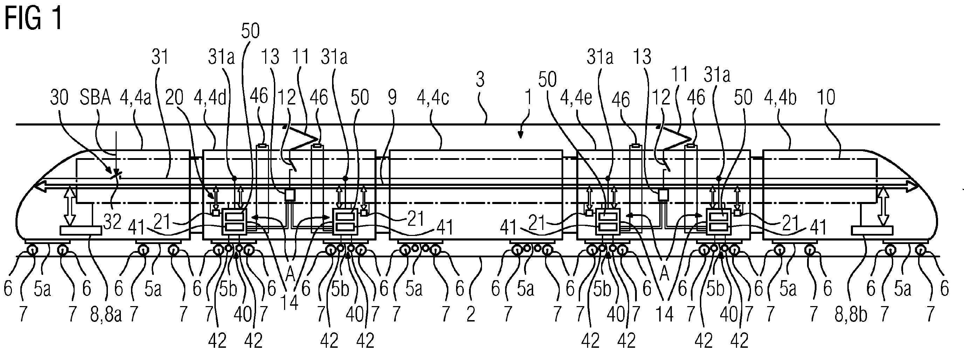

Die Figur 1 zeigt ein erfindungsgemäßes Fahrzeug 1 in Form eines Schienenfahrzeugs auf einer Strecke 2, die mit einer Oberleitung 3 einer Bahnnetzversorgung versehen ist.

Das Schienenfahrzeug weist beispielhaft mehrere Wagen 4 auf, von denen zwei Endwagen 4a, 4b und drei Mittelwagen 4c, 4d, 4e bilden. Die beiden Endwagen 4a, 4b und der mit 4c bezeichnete Mittelwagen sind antriebslose Laufwagen. Die Laufwagen weisen jeweils zwei Drehgestelle 5a in Form sogenannter Laufdrehgestelle ohne Antriebseinrichtungen auf. Die zwei mit 4d und 4e bezeichneten Mittelwagen sind Triebwagen, welche in der Praxis auch als Powercars bezeichnet werden. Die Triebwagen 4d, 4e weisen jeweils zwei Drehgestelle 5b in Form sogenannter Triebdrehgestelle auf. Jedem der Triebdrehgestelle 5b ist jeweils eine lokale Anordnung A zur Traktion des Fahrzeugs zugeordnet. Dabei weist eine jeweilige lokale Anordnung A jeweils eine Antriebseinrichtung 40 mit einer Stromrichtereinheit 41 und zwei elektrischen Motoren 42 auf. Außerdem weist eine jeweilige lokale Anordnung A jeweils eine erfindungsgemäße Vorrichtung 50 auf.

An den Drehgestellen 5a, 5b sind jeweils zwei endseitig mit Rädern 6 versehene Radachsen 7 gelagert.

Das Schienenfahrzeug weist weiterhin eine zentrale Zugsteuereinrichtung 8 mit zwei redundanten Zugsteuergeräten 8a, 8b auf. Außerdem weist das Schienenfahrzeug eine Datenaustauscheinrichtung 9 und eine als Ganzes mit 10 bezeichnete Energieversorgungseinrichtung auf. Die Datenaustauscheinrichtung 9 erstreckt sich über alle Wagen 4 und kann beispielsweise als Zugbus oder Ethernet ausgebildet sein. Von der Energieversorgungseinrichtung 10 sind in der Figur 1 im Detail insbesondere Stromabnehmer 11, Hauptleistungsschalter 12 und Transformatoren 13 gezeigt.

Das Schienenfahrzeug 1 weist auch eine als Ganzes mit 20 bezeichnete Einrichtung zur Anforderung einer Abschaltung von Antriebssteuereinrichtungen und eine als Ganzes mit 30 bezeichnete weitere Einrichtung zur Anforderung einer Schnellbremsung auf.

Die zentrale Zugsteuereinrichtung 8 und die Datenaustauscheinrichtung 9 sind Teil der Einrichtung 20 zur Anforderung einer Abschaltung von Antriebssteuereinrichtungen. Darüber hinaus gehören zu der Einrichtung 20 Klippschalter 21. Dabei ist jeder der lokalen Anordnungen A jeweils einer der Klippschalter 21 zugeordnet.

Zu der Einrichtung 30 zur Anforderung einer Schnellbremsung gehört eine hartverdrahtete Sicherheitsschleife 31, im Zuge derer zumindest ein Kontakt 32 angeordnet ist, welcher unter Einwirkung einer Schnellbremsanforderung SBA geöffnet wird. Wie im Weiteren gezeigt, sind aber auch die zentrale Zugsteuereinrichtung 8 und die Datenaustauscheinrichtung 9 Teil der Einrichtung 30.

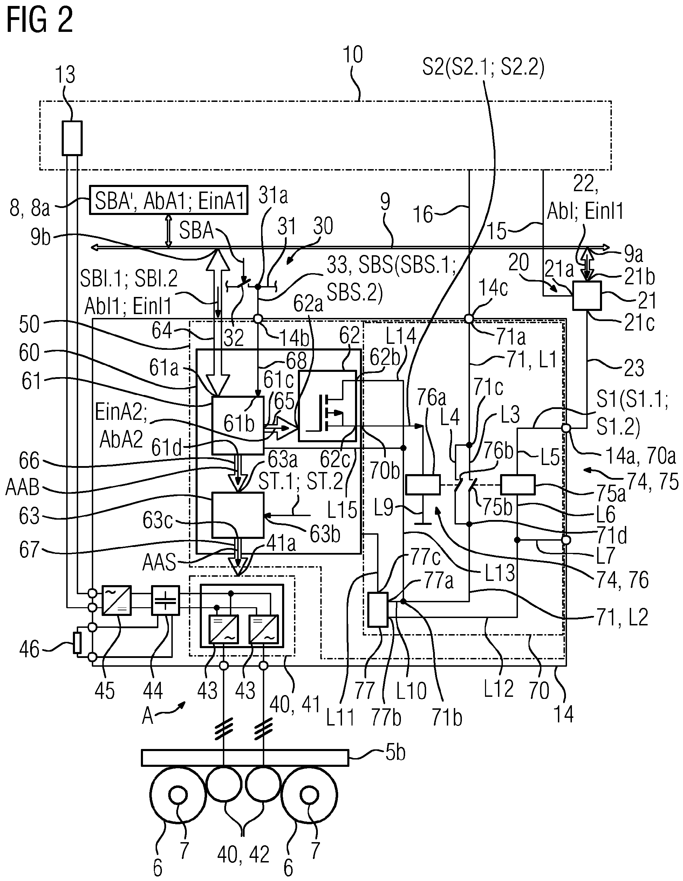

Die Figur 2 zeigt eines der Triebdrehgestelle 5b aus der Figur 1 mit der ihm zugeordneten lokalen Anordnungen A sowie mit Teilen der Einrichtungen 8, 9, 10, 20 und 30.

Wie bereits erwähnt, weist die lokale Anordnung A eine Antriebseinrichtung 40 und eine erfindungsgemäße Vorrichtung 50 auf.

Die lokalen Anordnungen A weist außerdem einen Stromrichtercontainer 14 auf, in dem die erfindungsgemäße Vorrichtung 50 und Teile der Antriebseinrichtung 40, insbesondere deren Stromrichtereinheit 41, untergebracht sind.

Zu einer ersten Anschlussstelle 14a des Stromrichtercontainers 14 ist eine erste Steuerleitung 23 geführt, welche mit einem Ausgang 21c des zugeordneten Klippschalters 21 verbunden ist. Der Klippschalter 21 verfügt neben dem bereits erwähnten Ausgang 21c über einen Versorgungseingang 21a zum Anschluss an eine erste Versorgungsleitung 15 der Energieversorgungseinrichtung 10. Außerdem verfügt der Klippschalter 21 über einen Steuereingang 21b, der über einen als Busabschnitt ausgebildeten Signalpfad 22 mit einem Anschlusspunkt 9a der Datenaustauscheinrichtung 9 verbunden ist.

Zu einer zweiten Anschlusstelle 14b des Stromrichtercontainers 14 ist eine weitere elektrische Steuerleitung 33 geführt, welche an einem zugeordneten Anschlusspunkt 31a der hartverdrahteten Sicherheitsschleife 31 abzweigt.

Wie bereits erwähnt, weist die Antriebseinrichtung 40 eine Stromrichtereinheit 41 und zwei Motoren 42 auf.

Die Vorrichtung 50 umfasst eine Antriebssteuereinrichtung 60 und eine Überwachungseinrichtung 70.

Die Antriebssteuereinrichtung 60 dient zur Steuerung der Antriebseinrichtung 40 des jeweiligen Drehgestells 5b.

Jeder der Motoren 42 dient im Motorbetrieb zum Antrieb bzw. im Generatorbetrieb zum Abbremsen jeweils einer der endseitig mit Rädern 6 versehenen Radachsen 7 des jeweiligen Triebdrehgestells 5b.

Alternativ hierzu könnte beispielsweise für jede Radachse eines Triebdrehgestells eine separate Antriebseinrichtung mit nur einem Motor vorgesehen sein.

Die jeweilige Stromrichtereinheit 41 weist zwei Traktionswechselrichter 43 in Form von Pulswechselrichtern auf. Die Traktionswechselrichter 43 sind parallel über einen Gleichspannungszwischenkreis 44 und einen Netzwechselrichter 45 an einen der Transformatoren 13 angeschlossen. Außerdem ist zumindest ein Bremswiderstand 46, insbesondere über einen hier nicht gezeigten Bremsschopper, an den Gleichspannungszwischenkreis 44 angeschlossen.

Während des Motorbetriebs richtet jeder der beiden Traktionswechselrichter 43 einen Gleichstrom aus dem Gleichspannungszwischenkreis 45 in einen Wechselstrom um, mit dem der an den jeweiligen Traktionswechselrichter 43 angeschlossene Motor 42 versorgt wird. Während eines elektrischen Bremsvorganges werden die Motoren 42 als Generatoren betrieben, wobei im Generatorbetrieb über die Traktionswechselrichter 43 elektrische Energie zu dem Bremswiderstand 15 abgeleitet wird. Alternativ hierzu könnte auch eine Konfiguration vorgesehen sein, mittels derer die elektrische Energie im Generatorbetrieb über die Traktionswechselrichter 43 in die Bahnnetzversorgung zurückgespeist wird.

Von der Antriebssteuereinrichtung 60 sind eine Steuereinheit 61, eine als Hardwareoutput (kurz "HW-Output" oder "HW-Out") ausgebildete Ausgabeeinheit 62 und eine Ansteuerkontrolleinheit 63, sowie vier als Busabschnitte ausgebildete Signalpfade 64 bis 67 und ein fünfter als elektrischer Leitungsabschnitt ausgebildeter Signalpfad 68 gezeigt.

Mittels eines ersten 64 der Signalpfade ist ein erster Eingang 61a der Steuereinheit 61 mit einem weiteren Anschlusspunkt 9b der Datenaustauscheinrichtung 9 verbunden. Außerdem ist ein zweiter Eingang 61b der Steuereinheit 61 mittels des elektrischen Leitungsabschnittes 68 mit der vom Anschlusspunkt 31a abzweigenden weiteren elektrischen Steuerleitung 33 verbunden.

Mittels eines zweiten 65 der Signalpfade ist ein erster Eingang 62a der Ausgabeeinheit 62 mit einem ersten Ausgang 61c der Steuereinheit 61 verbunden.

Über einen dritten 66 der Signalpfade ist ein erster Eingang 63a der Ansteuerkontrolleinheit 63 mit einem zweiten Ausgang 61d der Steuereinheit 61 verbunden.

Und über den vierten Signalpfad 67 ist ein erster Eingang 41a der Stromrichtereinheit 41 mit einem Ausgang 63c der Ansteuerkontrolleinheit 63 verbunden.

Zur Steuerung der Antriebseinrichtung 40 gibt die Steuereinheit 61 unter Einwirkung eines hier nicht gezeigten Steuerbefehls der zentrale Zugsteuereinrichtung 8 an die Ansteuerkontrolleinheit 63 der Antriebssteuereinrichtung 60 einen Antriebanssteuerbefehl AAB aus, welchen die Ansteuerkontrolleinheit 63 in ein Antriebsansteuersignal AAS umsetzt.

Die Ansteuerkontrolleinheit 63 gibt die Ausgabe des Antriebsansteuersignals AAS frei, wenn an einem Kontrolleingang 63b ein Traktionsfreigabe-Steuersignalwert ST.1 anliegt. Die Ansteuerkontrolleinheit 63 sperrt die Ausgabe des Antriebsansteuersignals AAS, wenn an ihren Kontrolleingang 63b anstelle des Traktionsfreigabe-Steuersignalwertes ST.1 ein Traktionssperre-Steuersignalwert ST.2 anliegt.

Hierzu wirkt in der Ansteuerkontrolleinheit 63 beispielsweise eine nicht weiter gezeigte Wechselrichtersperre auf Ausgangstreiber. Liegt der Traktionsfreigabe-Steuersignalwert ST.1 an dem Kontrolleingang 63b an, so schaltet die Wechselrichtersperre die Ausgabe von Impulsen zur Ansteuerung der beiden Traktionswechselrichter 43 der Stromrichtereinheit 41, welche das Antriebsansteuersignal AAS bilden, frei. Liegt der Traktionssperre-Steuersignalwert ST.2 an dem Kontrolleingang 63b an, so schaltet die Wechselrichtersperre die Ausgabe der Impulse zur Ansteuerung der beiden Traktionswechselrichter 43 der Stromrichtereinheit 41 ab.

Die Überwachungseinrichtung 70 ist als eine Hardwareeinrichtung in Form einer elektrischen Schaltung ausgebildet.

Die Überwachungseinrichtung 70 weist Leitungsabschnitten L1 bis L1? auf, wobei mit den Leitungsabschnitten L1 und L2 ein elektrischer Versorgungspfad 71 gebildet ist. Der elektrische Versorgungspfad 71 weist einen von einer dritten Anschlusstelle 14c des Stromrichtercontainers 14 gebildeten eingangsseitigen Anschlusspunkt 71a zu der Energieversorgungseinrichtung 10 und einen ausgangsseitigen Anschluss 71b zu der Antriebssteuereinrichtung 60 auf. Im Zuge des Versorgungspfades ist zwischen weiteren Anschlusspunkten 71c und 71d eine Schalteinrichtung 74 angeordnet ist. Der eine Leitungsabschnitt L1 des elektrischen Versorgungspfades 71 verbindet den eingangsseitigen Anschlusspunkt 71a mit dem einen weiteren Anschlusspunkt 71c und der Leitungsabschnitt L2 verbindet den anderen weiteren Anschlusspunkt 71d mit dem ausgangsseitigen Anschlusspunkt 7b.

Der eingangsseitige Anschlusspunkt 71a des Versorgungspfades 71 ist über eine elektrische Verbindung mit einem hier nicht gezeigten Spannungspol einer Batterie der Energieversorgungseinrichtung verbunden, so dass am eingangsseitigen Anschlusspunkt 71a eine Eingangsspannung, insbesondere eine 110-Volt Eingangsspannung, anliegt. Bei geschlossenem Versorgungspfad 71 ist die Eingangsspannung am ausgangsseitigen Anschlusspunkt 71b bereitgestellt. Von der genannten Verbindung ist in der Figur 2 lediglich ein Leitungsabschnitt 16 gezeigt.

Außerdem sind die einzelnen Komponenten 61, 62 und 63 der Antriebssteuereinrichtung 60 über weitere elektrische Verbindungen mit dem ausgangsseitigen Anschlusspunkt 71b des Versorgungspfades 71 verbunden sind.

Im Zuge einer der weiteren Verbindungen, zu der die Leitungsabschnitte L10 und L11 gehören, ist eine containerinterne Spannungsversorgungseinheit 77 vorgesehen, welche die bereitgestellte Eingangsspannung in eine Ausgangsspannung, insbesondere eine 24-Volt Ausgangsspannung, umsetzt.

Über andere der weiteren Verbindungen, die von den Leitungsabschnitte L11 und L12 bzw. von den Leitungsabschnitte L11 und L13 gebildet sind, ist der ausgangsseitigen Anschlusspunkt 71b des Versorgungspfades 71 direkt mit einem zweiten Eingang 62b der Ausgabeeinheit 62 bzw. direkt mit einem dritten Eingang 61e der Steuereinheit 61 verbunden.

Die Schalteinrichtung 74 weist zwei parallel geschaltete Schalteinheiten 75, 76 auf. Die beiden Schalteinheiten 75, 76 weisen jeweils einen Aktuator 75a bzw. 76a sowie jeweils einen von dem Aktuator 75a bzw. 76a betätigbaren Schaltkontakt 75b bzw. 76b auf.

Der Schaltkontakt 75b der einen Schalteinheit 75 ist im Zuge des mit den beiden Anschlusspunkten 71c, 71d verbundenen Leitungsabschnittes L3 angeordnet. Der Schaltkontakt 76b der anderen Schalteinheit 76 ist im Zuge des mit den beiden Anschlusspunkten 71c, 71d verbundenen Leitungsabschnittes L4 angeordnet.

Der mit 75a bezeichnete Aktuator ist zum Einen über den Leitungsabschnitt L5 mit der vom Anschlusspunkt 21a abzweigenden Steuerleitung 23 und zum Anderen über die Leitungsabschnitt L6 und L7 mit einem hier nicht gezeigten Massepol verbunden.

Das an die Anschlusstelle 14a angeschlossene Ende des Leitungsabschnittes L5 bildet einen ersten Signaleingang 70a der Überwachungseinrichtung 70.

Der mit 76a bezeichnete Aktuator ist zum Einen über den Leitungsabschnitt L8 mit dem Ausgang 62c der Ausgabeeinheit 62 und zum Anderen über einen Leitungsabschnitt L9 mit einem hier ebenfalls nicht gezeigten weiteren Massepol verbunden.

Das an den Ausgang 62c der Ausgabeeinheit 62 angeschlossene Ende des Leitungsabschnitt L8 bildet einen zweiten Signaleingang 70b der Überwachungseinrichtung 70.

Der Versorgungspfad 71 wird somit unterbrochen, wenn beide Schalteinheiten 75, 76 geöffnet werden, und er wird geschlossen, wenn zumindest eine der beiden Schalteinheiten 75, 76 geschlossen wird.

Die erfindungsgemäße Vorrichtung arbeitet in der folgenden Weise:
Wird mittels der zentralen Zugsteuereinrichtung 8 unabhängig von einer jeweiligen Antriebssteuereinrichtung 60 eine Anforderung zum Abschalten der Antriebssteuereinrichtung 60 aktiviert, so liegt mit dieser Anforderung eine antriebssteuerunabhängig aktivierte Abschaltanforderung AbA1 vor. Die zentrale Zugsteuereinrichtung 8 setzt die antriebssteuerunabhängig aktivierte Abschaltanforderung AbA1 in eine Abschaltinformation AbI1 um und übermittelt die Abschaltinformation IAb1 über die Datenaustauscheinrichtung 9 und den Signalpfad 22 an den Klippschalter 21, welcher der mit der Antriebssteuereinrichtung 60 versehenen Vorrichtung 50 zugeordnete ist. Der jeweilige Klippschalter 21 stellt dann an seinem Ausgang 21c einen 0-Volt Spannungswert bereit, welcher einen Signalwert S1.2 eines ersten Anforderungssignals S1 bildet, wobei der Signalwert S1.2 - also der 0-Volt Spannungswert - der Überwachungseinrichtung 70 anzeigt, dass die antriebssteuerunabhängig aktivierte Abschaltanforderung AbA1 vorliegt. Unter der Einwirkung des Signalwertes S1.2 wird die erste Schalteinheit geöffnet.

Wird mittels der zentralen Zugsteuereinrichtung 8 unabhängig von einer jeweiligen Antriebssteuereinrichtung 60 eine Anforderung zum Einschalten der Antriebssteuereinrichtung 60 aktiviert, so liegt mit dieser eine antriebssteuerunabhängig aktivierte Einschaltanforderung EinA1 vor. Die zentrale Zugsteuereinrichtung 8 setzt die antriebssteuerunabhängig aktivierte Einschaltanforderung EinA1 in eine Einschaltinformation EinI1 um und übermittelt die Einschaltinformation EinI1 über die Datenaustauscheinrichtung 9 an den Klippschalter 21, welcher der mit der Antriebssteuereinrichtung 60 versehenen Vorrichtung 50 zugeordnete ist. Der jeweilige Klippschalter 21 stellt dann an seinem Ausgang 21c einen 110-Volt Spannungswert bereit, welcher einen anderen Signalwert S1.1 des ersten Anforderungssignals S1 bildet, wobei der andere Signalwert S1.1 - also der 110-Volt Spannungswert - der Überwachungseinrichtung 70 anzeigt, dass die antriebssteuerunabhängig aktivierte Einschaltanforderung EinA1 vorliegt. Unter der Einwirkung des anderen Signalwertes S1.1 wird die erste Schalteinheit 75 geschlossen.

Liegt die antriebssteuerunabhängig aktivierte Abschaltanforderung AbA1 vor, so wird diese durch die Abschaltinformation AbI1 über die Datenaustauscheinrichtung 9 und den Signalpfad 64 auch der Steuereinheit 61 angezeigt. Und liegt die antriebssteuerunabhängig aktivierte Einschaltanforderung EinA1 vor, so wird diese durch die Einschaltinformation EinI1 über die Datenaustauscheinrichtung 9 und den Signalpfad 64 auch der Steuereinheit 61 angezeigt.

Die hartverdrahtete Sicherheitsschleife 31 dient zur Bereitstellung eines Schnellbremssignals SBS in Form einer elektrischen Spannung, deren Wert anzeigt, ob die Schnellbremsanforderung SBA vorliegt oder nicht vorliegt. Ist die an eine Spannungsquelle angeschlossene Sicherheitsschleife 31 aufgrund der Schnellbremsanforderung SBA offen, so bildet ein am Anschlusspunkt 31a abgreifbarer 0-Volt Spannungswert einen Schnellbremssignalwert SBS.1 des Schnellbremssignals SBS, welcher anzeigt, dass die Schnellbremsanforderung SBA vorliegt. Ist die Sicherheitsschleife 31 geschlossen, so bildet ein am Anschlusspunkt 31a abgreifbarer 110V-Volt Spannungswert einen anderen Schnellbremssignalwert SBS.2 des Schnellbremssignals SBS, welcher anzeigt, dass die Schnellbremsanforderung SBA nicht vorliegt.

Die zentrale Zugsteuereinrichtung 8 und die Datenaustauscheinrichtung 9 können ebenfalls Teil der Einrichtung 30 zur Anforderung einer Schnellbremsung sein, da von der zentralen Zugsteuereinrichtung 8 eine Schnellbremsanforderung SBA' in eine Schnellbremsinformation SBI.1 umgesetzt und diese dann über die Datenaustauscheinrichtung 9 und den Signalpfad 64 bereitgestellt werden kann. Außerdem kann, wenn die Schnellbremsanforderung SBA' nicht vorliegt, durch die zentrale Zugsteuereinrichtung 8 eine andere Schnellbremsinformation SBI.2 bereitgestellt werden, welche anzeigt, dass die Schnellbremsanforderung SBA' nicht vorliegt.

Liegt der Steuereinheit 61 zusätzlich zu der Abschaltinformation AbI1 der Schnellbremssignalwert SBS.1 aufgrund der Schnellbremsanforderung SBA oder die Schnellbremsinformation SBI.1 aufgrund der Schnellbremsanforderung SBA' vor, dann aktiviert die Steuereinheit 61 eine Anforderung zum Einschalten der Antriebssteuereinrichtung 60 und gibt diese an die Ausgabeeinheit 62 der Antriebssteuereinrichtung 60 aus. Diese Anforderung zum Einschalten ist somit eine antriebssteuerabhängig aktivierte Einschaltanforderung EinA2.

Wenn der Steuereinheit 61 die Einschaltinformation EinI1 vorliegt, dann gibt sie ebenfalls die antriebssteuerabhängig aktivierte Einschaltanforderung EinA2 an die Ausgabeeinheit 62 aus.

Die Ausgabeeinheit 62 setzt die antriebssteuerabhängig aktivierte Einschaltanforderung EinA2 in einen Signalwert S2.1 eines zweiten Anforderungssignals S2, insbesondere in einen 110-Volt Spannungswert, um und gibt diesen an ihrem Ausgang 62c an die Überwachungseinrichtung 70 aus. Die Antriebssteuereinrichtung 60 stellt also der Überwachungseinrichtung 70 den Signalwert S2.1 bereit und zeigt dieser damit an, dass die antriebssteuerabhängig aktivierte Einschaltanforderung EinA2 vorliegt. Unter der Einwirkung des Signalwertes S2.1 bleibt die zweite Schalteinheit 76 geschlossen bzw. wird, falls sie zuvor offen war, geschlossen.

Die Überwachungseinrichtung 70 verhindert somit ein Abschalten der Antriebssteuereinrichtung 60, wenn ihr mittels der anliegenden Anforderungssignalen S1, S2, angezeigt ist, dass neben der antriebssteuerunabhängig aktivierten Abschaltanforderung AbA1 die antriebssteuerabhängig aktivierte Einschaltanforderung EinA2 vorliegt.

Liegt der Steuereinheit 61 zusätzlich zu der Abschaltinformation AbI1 weder der Schnellbremssignalwert SBS.1 aufgrund der Schnellbremsanforderung SBA noch die Schnellbremsinformation SBI.1 aufgrund der Schnellbremsanforderung SBA' vor, dann aktiviert die Steuereinheit 61 eine Anforderung zum Abschalten der Antriebssteuereinrichtung 60 und gibt diese an die Ausgabeeinheit 62 der Antriebssteuereinrichtung 60 aus. Diese Anforderung zum Abschalten ist somit eine antriebssteuerabhängig aktivierte Abschaltanforderung AbA2.

Die Ausgabeeinheit 62 setzt die antriebssteuerabhängig aktivierte Abschaltanforderung AbA2 in einen anderen Signalwert S2.2 des zweiten Anforderungssignals S2, insbesondere einen 0-Volt Spannungswert, um und gibt diesen an ihrem Ausgang 62c aus. Die Antriebssteuereinrichtung 60 stellt also der Überwachungseinrichtung 70 den anderen Signalwert S2.2 bereit und zeigt dieser damit an, dass die antriebssteuerabhängig aktivierte Abschaltanforderung AbA2 vorliegt. Unter der Einwirkung des anderen Signalwertes S2.2 wird die zweite Schalteinheit 76 geöffnet.

Die Überwachungseinrichtung 70 bewirkt somit ein Abschalten der Antriebssteuereinrichtung 60, wenn ihr mittels der anliegenden Anforderungssignalen S1, S2, angezeigt ist, dass neben der antriebssteuerunabhängig aktivierten Abschaltanforderung AbA1 anstelle der antriebssteuerabhängig aktivierte Einschaltanforderung EinA2 die antriebssteuerabhängig aktivierte Abschaltanforderung AbA2 vorliegt.

Durch das Abschalten der Antriebssteuereinrichtung 60 trennt die Überwachungseinrichtung 70 die Antriebssteuereinrichtung 60 von der Energieversorgungseinrichtung 10 des Fahrzeugs 1.

Mit der erfindungsgemäßen Vorrichtung bzw. dem erfindungsgemäßen Verfahren kann einerseits, beispielsweise bei internen Fehlern oder in einem Abschaltprofil um Energie zu sparen, ein Abschalten einzelner oder aller Antriebssteuereinrichtungen 60 des Fahrzeugs 1 erfolgen.

Andererseits kann aber das Abschalten auch verhindert werden, wenn es, beispielsweise aufgrund einer Schnellbremsanforderung, nicht erfolgen darf.

Ob eine jeweilige der lokalen Antriebssteuereinrichtungen 60 durch eine Abschaltanforderung der zentralen Zugsteuereinrichtung 8 abgeschaltet wird oder nicht, entscheidet die jeweilige lokale Antriebssteuereinrichtungen 60 selbst, indem sie entweder ihre Abschaltanforderung AbA2 oder ihre Einschaltanforderung EinA2 aktiviert. Die der jeweiligen Antriebssteuereinrichtungen 60 zugeordnete Überwachungseinrichtung 70 setzt diese Entscheidung dann lokal um.

Durch die erfindungsgemäße Vorrichtung 50 wird lokal einer hohen Sicherheitsanforderung im Hinblick auf die Betriebsbereitschaft einer jeweiligen der Antriebssteuereinrichtungen 60 und der durch sie gesteuerten Antriebseinrichtungen 40 entsprochen - die Sicherheitsanforderung ist also nicht zentral ausgelagert.

## Patentansprüche

1. Vorrichtung (50) mit einer Antriebssteuereinrichtung (60), welche zur Steuerung einer einen oder mehrere elektrische Motoren (42) aufweisenden Antriebseinrichtung (40) eines Fahrzeugs (1) geeignet ausgebildet ist,
gekennzeichnt durch
eine Überwachungseinrichtung (70), welche geeignet ausgebildet ist, ein Abschalten der Antriebssteuereinrichtung (60) zu verhindern, wenn ihr, insbesondere mittels anliegenden Anforderungssignalen (S1, S2), angezeigt ist, dass neben einer antriebssteuerunabhängig aktivierten Abschaltanforderung (AbA1) eine antriebssteuerabhängig aktivierte Einschaltanforderung (EinA2) vorliegt.

2. Vorrichtung (50) nach Anspruch 1,
**dadurch gekennzeichnet, dass**
die Überwachungseinrichtung (70) geeignet ausgebildet, das Abschalten der Antriebssteuereinrichtung (60) zu bewirken, wenn ihr, insbesondere mittels der Anforderungssignale (S1, S2), angezeigt ist, dass neben der antriebssteuerunabhängig aktivierten Abschaltanforderung (AbA1) anstelle der antriebssteuerabhängig aktivierten Einschaltanforderung (EinA2) eine antriebssteuerabhängig aktivierte Abschaltanforderung (AbA2) vorliegt.

3. Vorrichtung (50) nach einem der Ansprüche 1 oder 2,
**dadurch gekennzeichnet, dass**
die Überwachungseinrichtung (70) einen ersten Signaleingang (70a) aufweist, an dem ein erstes Anforderungssignal (S1) der Anforderungssignale (S1, S2) anliegt, wobei im Falle des Vorliegens der antriebssteuerunabhängig aktivierten Abschaltanforderung (AbA1), diese der Überwachungseinrichtung (70) durch das erste Anforderungssignal (S1), insbesondere in Form eines Signalwertes (S1.2) seiner Signalwerte (S1.1, S1.2), angezeigt ist und
die Überwachungseinrichtung (70) einen zweiten Signaleingang (70b) aufweist, an dem ein zweites Anforderungssignal (S2) der Anforderungssignale (S1, S2) anliegt, wobei im Falle des Vorliegens der antriebssteuerabhängig aktivierten Einschaltanforderung (EinA2), diese der Überwachungseinrichtung (70) durch das zweite Anforderungssignal (S2), insbesondere in Form eines Signalwertes (S2.1) seiner Signalwerte (S2.1, S2.2), angezeigt ist.

4. Vorrichtung (50) nach Anspruch 3,
**dadurch gekennzeichnet, dass**
im Falle des Vorliegens der antriebssteuerabhängig aktivierten Abschaltanforderung (AbA2), diese der Überwachungseinrichtung (70) durch das zweite Anforderungssignal (S2), insbesondere in Form eines anderen Signalwertes (S2.2) seiner Signalwerte (S2.1, S2.2), angezeigt ist.

5. Vorrichtung (50) nach einem der Ansprüche 1 bis 4,
**dadurch gekennzeichnet,**
**dass** die Antriebssteuereinrichtung (60) geeignet ausgebildet ist, ihre Einschaltanforderung (EinA2) zu aktivieren, wenn ihr, insbesondere durch einen Schnellbremssignalwert (SBS.2) eines anliegenden Schnellbremssignals (SBS) oder durch eine mit einem Datenpacket empfangene Schnellbremsinformation (SBI.2), eine Schnellbremsanforderung (SBA, SBA') angezeigt ist, und
**dass** die Antriebssteuereinrichtung (60) geeignet ausgebildet ist, anstelle ihrer Einschaltanforderung (EinA2) ihre Abschaltanforderung (AbA2) zu aktivieren, wenn ihr die Schnellbremsanforderung (SBA, SBA') nicht angezeigt ist.

6. Vorrichtung (50) nach einem der Ansprüche 3 bis 5,
**dadurch gekennzeichnet, dass**
die Überwachungseinrichtung (70) geeignet ausgebildet ist, durch das Abschalten der Antriebssteuereinrichtung (60) diese von einer Energieversorgungseinrichtung (10) des Fahrzeugs zu trennen und hierzu einen Versorgungspfad (71) mit eingangsseitigem Anschlusspunkt (71a) zu der Energieversorgungseinrichtung (10) und ausgangsseitigem Anschlusspunkt (71b) zu der Antriebssteuereinrichtung (60) sowie zwei im Zuge des Versorgungspfades (71) parallel geschaltete Schalteinheiten (75, 76) aufweist, sodass der Versorgungspfad (71) unterbrochen ist, wenn beide Schalteinheiten (75, 76) geöffnet sind, und geschlossen ist, wenn zumindest eine der beiden Schalteinheiten (75, 76) geschlossen ist,
wobei eine erste Schalteinheit (75) der beiden Schalteinheiten (75, 76) unter Einwirkung des ersten Anforderungssignals (S1) geöffnet ist, wenn mittels des ersten Anforderungssignals (S1) die antriebssteuerunabhängig aktivierte Abschaltanforderung (AbA1) angezeigt ist, und geschlossen ist, wenn mittels des ersten Anforderungssignals (S1) eine antriebssteuerunabhängig aktivierte Einschaltanforderung (AEin1) angezeigt ist, und
wobei die zweite Schalteinheit (76) der beiden Schalteinheiten (75, 76) unter Einwirkung des zweiten Anforderungssignals (S2) geschlossen ist, wenn mittels des zweite Anforderungssignals (S2) die antriebssteuerabhängig aktivierte Einschaltanforderung (EinA2) angezeigt ist, und geöffnet ist, wenn mittels des zweiten Anforderungssignals (S2) die antriebssteuerabhängig aktivierte Abschaltanforderung (AbA2), angezeigt ist.

7. Vorrichtung (50) nach einem der Ansprüche 5 oder 6,
**dadurch gekennzeichnet, dass**
die Antriebssteuereinrichtung (60) eine Steuereinheit (61) und eine mit einem Signalausgang (62c) zur Überwachungseinrichtung (70) versehene Ausgabeeinheit (HW-Out) aufweist, wobei die Steuereinheit (61) geeignet ausgebildet ist, die antriebssteuerabhängig aktivierte Einschaltanforderung (EinA2) zu aktivieren und an die Ausgabeeinheit (62) auszugeben, wenn ihr die Schnellbremsanforderung (SBA, SBA') angezeigt ist, und
wobei die Ausgabeeinheit (62) geeignet ausgebildet ist, die antriebssteuerabhängig aktivierte Einschaltanforderung (EinA2) in das zweite Anforderungssignal (S2) derart umzusetzen und an ihrem Signalausgang (62c) an die Überwachungseinrichtung (70) auszugeben, dass dieser die antriebssteuerabhängig aktivierte Einschaltanforderung (EinA2) durch das zweite Anforderungssignal (S2), insbesondere in Form des Signalwertes (S2.1), angezeigt ist.

8. Fahrzeug (1), insbesondere Schienenfahrzeug, mit zumindest einer einen oder mehrere elektrische Motoren (42) aufweisenden Antriebseinrichtung (40) und mit einer Vorrichtung (50), welche eine Antriebssteuereinrichtung (60) zur Steuerung der zumindest einen Antriebseinrichtung (40) aufweist,
**dadurch gekennzeichnet, dass**
die Vorrichtung (50) nach einem der Ansprüche 1 bis 7 ausgebildet ist.

9. Verfahren zum Betreiben einer Antriebssteuereinrichtung (60), welche zur Steuerung einer einen oder mehrere elektrische Motoren (42) aufweisenden Antriebseinrichtung (40) eines Fahrzeugs (1) geeignet ausgebildet ist,
**dadurch gekennzeichnt**, dass
eine Überwachungseinrichtung (70) ein Abschalten der Antriebssteuereinrichtung (60) verhindert, wenn ihr, insbesondere mittels anliegenden Anforderungssignalen (S1, S2), angezeigt ist, dass neben einer antriebssteuerunabhängig aktivierten Abschaltanforderung (AbA1) eine antriebssteuerabhängig aktivierte Einschaltanforderung (EinA2) vorliegt.

10. Verfahren nach Anspruch 9,
**dadurch gekennzeichnet, dass**
die Überwachungseinrichtung (70) das Abschalten der Antriebssteuereinrichtung (60) bewirkt, wenn ihr, insbesondere mittels der Anforderungssignale (S1, S2), angezeigt ist, dass neben der antriebssteuerunabhängig aktivierten Abschaltanforderung (AbA1) anstelle der antriebssteuerabhängig aktivierten Einschaltanforderung (EinA2) eine antriebssteuerabhängig aktivierte Abschaltanforderung (AbA2) vorliegt.

11. Verfahren nach einem der Ansprüche 9 oder 10,
**dadurch gekennzeichnet, dass**
an einem ersten Signaleingang (70a) der Überwachungseinrichtung (70) ein erstes Anforderungssignal (S1) der Anforderungssignale (S1, S2) angelegt wird, wobei im Falle des Vorliegens der antriebssteuerunabhängig aktivierten Abschaltanforderung (AbA1), diese der Überwachungseinrichtung (70) durch das erste Anforderungssignal (S1), insbesondere in Form eines Signalwertes (S1.2) seiner Signalwerte (S1.1, S1.2), anzeigt wird und
an einem zweiten Signaleingang (70b) der Überwachungseinrichtung (70) ein zweites Anforderungssignal (S2) der Anforderungssignale (S1, S2) angelegt wird, wobei im Falle des Vorliegens der antriebssteuerabhängig aktivierten Einschaltanforderung (EinA2), diese der Überwachungseinrichtung (70) durch das zweite Anforderungssignal (S2), insbesondere in Form eines Signalwertes (S2.1) seiner Signalwerte (S2.1, S2.2), anzeigt wird.

12. Verfahren nach Anspruch 11,
**dadurch gekennzeichnet, dass**
im Falle des Vorliegens der antriebssteuerabhängig aktivierten Abschaltanforderung (AbA2), diese der Überwachungseinrichtung (70) durch das zweite Anforderungssignal (S2), insbesondere in Form eines anderen Signalwertes (S2.2) seiner Signalwerte (S2.1, S2.2), anzeigt wird.

13. Verfahren nach einem der Ansprüche 9 bis 12,
**dadurch gekennzeichnet,**
**dass** die Antriebssteuereinrichtung (60) ihre Einschaltanforderung (EinA2) aktiviert, wenn ihr, insbesondere durch einen Schnellbremssignalwert (SBS.2) eines anliegenden Schnellbremssignals (SBS) oder durch eine mit einem Datenpacket empfangene Schnellbremsinformation (SBI), eine Schnellbremsanforderung (SBA, SBA') angezeigt wird, und
**dass** die Antriebssteuereinrichtung (60) anstelle ihrer Einschaltanforderung (EinA2) ihre Abschaltanforderung (AbA2) aktiviert, wenn ihr die Schnellbremsanforderung (SBA, SBA') nicht angezeigt wird.

14. Verfahren nach einem der Ansprüche 11 bis 13,
**dadurch gekennzeichnet,dass** die Überwachungseinrichtung (70) durch das Abschalten der Antriebssteuereinrichtung (60) diese von einer Energieversorgungseinrichtung (10) des Fahrzeugs trennt und hierzu einen Versorgungspfad (71) mit eingangsseitigem Anschlusspunkt (71a) zu der Energieversorgungseinrichtung (10) und ausgangsseitigem Anschlusspunkt (71b) zu der Antriebssteuereinrichtung (60) sowie zwei im Zuge des Versorgungspfades (71) parallel geschaltete Schalteinheiten (75, 76) aufweist, sodass der Versorgungspfad (71) unterbrochen wird, wenn beide Schalteinheiten (75, 76) geöffnet werden, und geschlossen wird, wenn zumindest eine der beiden Schalteinheiten (75, 76) geschlossen wird,
wobei eine erste Schalteinheit (75) der beiden Schalteinheiten (75, 76) unter Einwirkung des ersten Anforderungssignals (S1) geöffnet wird, wenn mittels des ersten Anforderungssignals (S1) die antriebssteuerunabhängig aktivierte Abschaltanforderung (AbA1) anzeigt wird, und geschlossen wird, wenn mittels des ersten Anforderungssignals (S1) die antriebssteuerunabhängig aktivierte Einschaltanforderung (AEin1) angezeigt wird, und
wobei die zweite Schalteinheit (76) der beiden Schalteinheiten (75, 76) unter Einwirkung des zweiten Anforderungssignals (S2) geschlossen wird, wenn mittels des zweite Anforderungssignals (S2) die antriebssteuerabhängig aktivierte Einschaltanforderung (EinA2) angezeigt wird, und geöffnet wird, wenn mittels des zweiten Anforderungssignals (S2) die antriebssteuerabhängig aktivierte Abschaltanforderung (AbA2), angezeigt wird.

15. Verfahren nach einem der Ansprüche 13 oder 14,
**dadurch gekennzeichnet,**
**dass** eine Steuereinheit (61) der Antriebssteuereinrichtung (60) die antriebssteuerabhängig aktivierte Einschaltanforderung (EinA2) aktiviert und an eine mit einem Signalausgang (62c) zur Überwachungseinrichtung (70) versehene Ausgabeeinheit (62) der Antriebssteuereinrichtung (60) ausgibt, wenn ihr die Schnellbremsanforderung (SBA, SBA') angezeigt wird, und
**dass** die Ausgabeeinheit (62) die antriebssteuerabhängig aktivierte Einschaltanforderung (EinA2) in das zweite Anforderungssignal (S2) derart umsetzt und an ihrem Signalausgang (62c) an die Überwachungseinrichtung (70) ausgibt, dass dieser die antriebssteuerabhängig aktivierte Einschaltanforderung (EinA2) durch das zweite Anforderungssignal (S2), insbesondere in Form des Signalwertes (S2.1), angezeigt wird.

## Claims

1. Device (50) having a drive control unit (60) which is suitably designed to control a drive unit (40) of a vehicle (1) which has one or more electric motors (42),
**characterised by**
a monitoring unit (70) which is suitably designed to prevent the drive control unit (60) from being switched off when it is notified, in particular by means of pending request signals (S1, S2), that in addition to a switch-off request (AbAl) activated independently of the drive control a switch-on request (EinA2) activated as a function of the drive control is present.

2. Device (50) according to claim 1,
**characterised in that**
the monitoring unit (70) is suitably designed to cause the drive control unit (60) to be switched off when it is notified, in particular by means of the request signals (S1, S2), that in addition to the switch-off request (AbAl) activated independently of the drive control a switch-off request (AbA2) activated as a function of the drive control is present instead of the switch-on request (EinA2) activated as a function of the drive control.

3. Device (50) according to one of claims 1 or 2,
**characterised in that**
the monitoring unit (70) has a first signal input (70a), at which a first request signal (Sl) of the request signals (Sl, S2) is pending, wherein if the switch-off request (AbAl) activated independently of the drive control is present, this is notified to the monitoring unit (70) by the first request signal (Sl), in particular in the form of one signal value (S1.2) of its signal values (Sl.l, S1.2) and
the monitoring unit (70) has a second signal input (70b), at which a second request signal (S2) of the request signals (S1, S2) is pending, wherein if the switch-on request (EinA2) activated as a function of the drive control is present, this is notified to the monitoring unit (70) by the second request signal (S2), in particular in the form of one signal value (S2.1) of its signal values (S2.1, S2.2).

4. Device (50) according to claim 3,
**characterised in that**
if the switch-off request (AbA2) activated as a function of the drive control is present, this is notified to the monitoring unit (70) by the second request signal (S2), in particular in the form of another signal value (S2.2) of its signal values (S2.1, S2.2).

5. Device (50) according to one of claims 1 to 4,
**characterised in that**
the drive control unit (60) is suitably designed to activate its switch-on request (EinA2) when it is notified of a rapid braking request (SBA, SBA'), in particular by a rapid braking signal value (SBS.2) of a pending rapid braking signal (SBS) or by rapid braking information (SBI.2) received with a data packet, and
that the drive control unit (60) is suitably designed to activate its switch-off request (AbA2) instead of its switch-on request (EinA2) if it is not notified of the rapid braking request (SBA, SBA').

6. Device (50) according to one of claims 3 to 5,
**characterised in that**
the monitoring unit (70) is suitably designed to disconnect the drive control unit (60) from an energy supply unit (10) of the vehicle by switching off said drive control unit (60) and for this purpose has a supply path (71) with an input-side connection point (71a) to the energy supply unit (10) and an output-side connection point (71b) to the drive control unit (60) as well as two switching units (75, 76) connected in parallel in the course of the supply path (71), such that the supply path (71) is interrupted when both switching units (75, 76) are opened, and is closed when at least one of the two switching units (75, 76) is closed,
wherein a first switching unit (75) of the two switching units (75, 76) is opened under the action of the first request signal (S1) when the switch-off request (AbAl) activated independently of the drive control is notified by means of the first request signal (Sl), and is closed when a switch-on request (AEinl) activated independently of the drive control is notified by means of the first request signal (Sl), and wherein the second switching unit (76) of the two switching units (75, 76) is closed under the action of the second request signal (S2) when the switch-on request (EinA2) activated as a function of the drive control is notified by means of the second request signal (S2), and is opened when the switch-off request (AbA2) activated as a function of the drive control is notified by means of the second request signal (S2).

7. Device (50) according to one of claims 5 or 6,
**characterised in that**
the drive control unit (60) has a control unit (61) and an output unit (HW-Out) provided with a signal output (62c) to the monitoring unit (70), wherein the control unit (61) is suitably designed to activate the switch-on request (EinA2) activated as a function of the drive control and to output it to the output unit (62) when it is notified of the rapid braking request (SBA, SBA'), and
wherein the output unit (62) is suitably designed to convert the switch-on request (EinA2) activated as a function of the drive control into the second request signal (S2) and to output it to the monitoring unit (70) at its signal output (62c), such that the latter is notified of the switch-on request (EinA2) activated as a function of the drive control by the second request signal (S2), in particular in the form of the signal value (S2.1).

8. Vehicle (1), in particular rail vehicle, with at least one drive unit (40) having one or more electric motors (42) and with a device (50) which has a drive control unit (60) to control the at least one drive unit (40),
**characterised in that**
the device (50) is designed according to one of claims 1 to 7.

9. Method for operating a drive control unit (60) which is suitably designed to control a drive unit (40) of a vehicle (1) having one or more electric motors (42),
**characterised in that**
a monitoring unit (70) prevents the drive control unit (60) from being switched off when it is notified, in particular by means of pending request signals (S1, S2), that in addition to a switch-off request (AbAl) activated independently of the drive control a switch-on request (EinA2) activated as a function of the drive control is present.

10. Method according to claim 9,
**characterised in that**
the monitoring unit (70) causes the drive control unit (60) to be switched off when it is notified, in particular by means of the request signals (S1, S2), that in addition to the switch-off request (AbAl) activated independently of the drive control, a switch-off request (AbA2) activated as a function of the drive control is present instead of the switch-on request (EinA2) activated as a function of the drive control.

11. Method according to one of claims 9 or 10,
**characterised in that**
a first request signal (Sl) of the request signals (Sl, S2) is applied to a first signal input (70a) of the monitoring unit (70), wherein if the switch-off request (AbA1) activated independently of the drive control is present, this is notified to the monitoring unit (70) by the first request signal (Sl), in particular in the form of one signal value (S1.2) of its signal values (Sl.l, S1.2), and
a second request signal (S2) of the request signals (S1, S2) is applied to a second signal input (70b) of the monitoring unit (70), wherein if the switch-on request (EinA2) activated as a function of the drive control is present, this is notified to the monitoring unit (70) by the second request signal (S2), in particular in the form of one signal value (S2.1) of its signal values (S2.1, S2.2).

12. Method according to claim 11,
**characterised in that**
if the switch-off request (AbA2) activated as a function of the drive control is present, this is notified to the monitoring unit (70) by the second request signal (S2), in particular in the form of another signal value (S2.2) of its signal values (S2.1, S2.2).

13. Method according to one of claims 9 to 12,
**characterised in that**
the drive control unit (60) activates its switch-on request (EinA2) when it is notified of a rapid braking request (SBA, SBA'), in particular by a rapid braking signal value (SBS.2) of a pending rapid braking signal (SBS) or by rapid braking information (SBI) received with a data packet, and
that the drive control unit (60) activates its switch-off request (AbA2) instead of its switch-on request (EinA2) if it is not notified of the rapid braking request (SBA, SBA').

14. Method according to one of claims 11 to 13,
**characterised in that**
the monitoring unit (70), by switching off the drive control unit (60), disconnects it from an energy supply unit (10) of the vehicle and for this purpose has a supply path (71) with an input-side connection point (71a) to the energy supply unit (10) and an output-side connection point (71b) to the drive control unit (60) as well as two switching units (75, 76) connected in parallel in the course of the supply path (71), such that the supply path (71) is interrupted when both switching units (75, 76) are opened, and closed when at least one of the two switching units (75, 76) is closed,
wherein a first switching unit (75) of the two switching units (75, 76) is opened under the action of the first request signal (Sl) when the switch-off request (AbAl) activated independently of the drive control is notified by means of the first request signal (Sl), and is closed when the switch-on request (AEinl) activated independently of the drive control is notified by means of the first request signal (S1), and wherein the second switching unit (76) of the two switching units (75, 76) is closed under the action of the second request signal (S2) when the switch-on request (EinA2) activated as a function of the drive control is notified by means of the second request signal (S2), and opened when the switch-off request (AbA2) activated as a function of the drive control is notified by means of the second request signal (S2) .

15. Method according to one of claims 13 or 14,
**characterised in that**
a control unit (61) of the drive control unit (60) activates the switch-on request (EinA2) activated as a function of the drive control and outputs it to an output unit (62) of the drive control unit (60) provided with a signal output (62c) to the monitoring unit (70) when it is notified of the rapid braking request (SBA, SBA'), and
that the output unit (62) converts the switch-on request (EinA2) activated as a function of the drive control into the second request signal (S2) and outputs it at its signal output (62c) to the monitoring unit (70), such that the latter is notified by the switch-on request (EinA2) activated as a function of the drive control by the second request signal (S2), in particular in the form of the signal value (S2.1).

## Revendications

1. Installation (50) comprenant un dispositif (60) de commande d'entraînement, qui est constitué de manière propre à commander un dispositif (40) d'entraînement, ayant un ou plusieurs moteurs (42) électriques, d'un véhicule (1),
**caractérisée par**
un dispositif (70) de contrôle, qui est constitué de manière propre à empêcher une mise hors circuit du dispositif (60) de commande d'entraînement lorsqu'il lui est indiqué, notamment au moyen de signaux appliqués, qu'il y a, outre une demande (AbA1) de mise hors circuit activée indépendamment de la commande d'entraînement, une demande (EinA2) de mise en circuit activée en fonction de la commande d'entraînement.

2. Installation (50) suivant la revendication 1,
**caractérisée en ce que**
le dispositif (70) de contrôle est constitué de manière propre à provoquer la mise hors circuit du dispositif (60) de commande d'entraînement lorsqu'il lui est indiqué, notamment au moyen des signaux (S1, S2) de demande, qu'il y a, outre la demande (AbA1) de mise hors circuit activée indépendamment de la commande d'entraînement au lieu de la demande (EinA2) de mise en circuit activée en fonction de la commande d'entraînement, une demande (AbA2) de mise en circuit activée en fonction de la commande d'entraînement.

3. Installation (50) suivant la revendication 1 ou 2,
**caractérisée en ce que**
le dispositif (70) de contrôle a une première entrée (70a) de signal, à laquelle s'applique un premier signal (S1) de demande parmi les signaux (S1, S2) de demande, dans laquelle, dans le cas de la présence de la demande (AbA1) de mise hors circuit activée indépendamment de la commande d'entraînement, celle-ci est indiquée au dispositif (70) de contrôle par le premier signal (S1) de demande, notamment sous la forme d'une valeur (S1.2) de signal parmi ses valeurs (S1.1, S1.2) de signal, et le dispositif (70) de contrôle a une deuxième entrée (70b) de signal, à laquelle s'applique un deuxième signal (S2) de demande parmi les signaux (S1, S2) de demande, dans laquelle, dans le cas de la présence de la demande (EinA2) de mise hors circuit activée en fonction de la commande d'entraînement, celle-ci est indiquée au dispositif (70) de contrôle par le deuxième signal (S2) de demande, notamment sous la forme d'une valeur (S2.1) de signal parmi ses valeurs (S2.1, S2.2) de signal.

4. Installation (50) suivant la revendication 3,
**caractérisée en ce que**,
dans le cas de la présence de la demande (AbA2) de mise hors circuit activée en fonction de la commande d'entraînement, celle-ci est indiquée au dispositif (70) de contrôle par le deuxième signal (S2) de demande, notamment sous la forme d'une autre valeur (S2.2) de signal parmi ses valeurs (S2.1, S2.2) de signal.

5. Installation (50) suivant l'une des revendications 1 à 4,
**caractérisée en ce que**,
le dispositif (70) de commande d'entraînement est constitué de manière propre à activer sa demande (EinA2) de mise hors circuit lorsqu'il lui est indiqué, notamment par une valeur (SBS.2) de signal de freinage rapide, l'application d'un signal (SBS) de freinage rapide ou par une information (SBI.2) de freinage rapide reçue avec un paquet de données, une demande (SBA, SBA') de freinage rapide, et
**en ce que** le dispositif (60) de commande d'entraînement est constitué de manière propre à activer, au lieu de sa demande (EinA2) de mise en circuit, sa demande (AbA2) de mise hors circuit s'il ne lui est pas indiqué la demande (SBA, SBA') de freinage rapide.

6. Installation (50) suivant l'une des revendications 3 à 5,
**caractérisée en ce que**
le dispositif (70) de contrôle est constitué de manière propre à séparer, par la mise hors circuit du dispositif (60) de commande d'entraînement, celui-ci d'un dispositif (10) d'alimentation en énergie du véhicule et à avoir à cet effet un trajet (71) d'alimentation ayant un point (71a) de connexion du côté de l'entrée menant au dispositif (10) d'alimentation en énergie et un point (71b) de connexion du côté de la sortie menant au dispositif (60) de commande d'entraînement, ainsi que deux unités (75, 76) de coupure montées en parallèle au cours du trajet (71) d'alimentation de manière à interrompre le trajet (71) d'alimentation lorsque les deux unités (75, 76) de coupure sont ouvertes et à le fermer lorsqu'au moins l'une des deux unités (75, 76) de coupure est fermée,
dans laquelle une première unité (75) de coupure parmi les deux unités (75, 76) de coupure est ouverte sous l'effet du premier signal (S1) de demande si, au moyen du premier signal (S1) de demande, la demande (AbA1) de mise hors circuit activée indépendamment de la commande d'entraînement est indiquée et est fermée si, au moyen du premier signal (S1) de demande, une demande (AEin1) de mise en circuit activée indépendamment de la commande d'entraînement est indiquée, et dans laquelle la deuxième unité (76) de coupure parmi les deux unités (75, 76) de coupure est fermée sous l'effet du deuxième signal (S2) de demande si, au moyen du deuxième signal (S2) de demande, la demande (EinA2) de mise en circuit activée en fonction de la commande d'entraînement est indiquée et est ouverte si, au moyen du deuxième signal (S2) de demande, la demande (AbA2) de mise hors circuit activée en fonction de la commande d'entraînement est indiquée.

7. Installation (50) suivant l'une des revendication 5 ou 6,
**caractérisée en ce que**
le dispositif (60) de commande d'entraînement a une unité (61) de commande et une unité (HW-Out) de sortie pourvue d'une sortie (62c) de signal vers le dispositif (70) de contrôle, l'unité (61) de commande étant constituée de manière propre à activer la demande (EinA2) de mise en circuit activée en fonction de la commande d'entraînement et à la donner à l'unité (62) de sortie lorsque la demande (SBA, SBA') de freinage rapide lui est indiquée, et
dans laquelle l'unité (62) de sortie est constituée de manière propre à transformer la demande (EinA2) de mise hors circuit activée en fonction de la commande d'entraînement en le deuxième signal (S2) de demande et à le donner sur sa sortie (62c) de signal au dispositif (70) de contrôle, **en ce qu'**il est indiqué à celui-ci la demande (EinA2) de mise hors circuit activée en fonction de la commande d'entraînement par le deuxième signal (S2) de demande, notamment sous la forme de la valeur (S2.1) de signal.

8. Véhicule (1), notamment véhicule ferroviaire, comprenant au moins un dispositif (40) d'entraînement ayant un ou plusieurs moteurs (42) électriques et comprenant une installation (50) qui a un dispositif (60) de commande d'entraînement pour la commande du au moins un dispositif (40) d'entraînement,
**caractérisé en ce que**,
l'installation (50) est constituée suivant l'une des revendications 1 à 7.

9. Procédé pour faire fonctionner un dispositif (60) de commande d'entraînement qui est constitué de manière propre à la commande d'un dispositif (40) d'entraînement, ayant un ou plusieurs moteurs (42) électriques, d'un véhicule (1),
**caractérisé en ce que**
un dispositif (70) de contrôle empêche une mise hors circuit du dispositif (60) de commande d'entraînement s'il lui est signalé, notamment au moyen de l'application de signaux (S1, S2) de demande, qu'il y a, outre une demande (AbA1) de mise hors circuit activée indépendamment d'une commande de l'entraînement, une demande (EinA2) de mise en circuit activée en fonction de la commande d'entraînement.

10. Procédé suivant la revendication 9,
**caractérisé en ce que**
le dispositif (70) de contrôle provoque la mise hors circuit du dispositif (60) de commande d'entraînement s'il lui est indiqué, notamment au moyen des signaux (S1, S2) de commande qu'il y a, outre la demande (AbA1) de mise hors service activée indépendamment de la commande de l'entraînement au lieu de la demande (EinA2) de mise en circuit activée en fonction de la commande de l'entraînement, une demande (AbA2) de mise hors circuit activée en fonction de la commande de l'entraînement.

11. Procédé suivant l'une des revendications 9 ou 10,
**caractérisé en ce que**
l'on applique à une première entrée (70a) de signal du dispositif (70) de contrôle un premier signal (S1) de demande parmi les signaux (S1, S2) de demande, dans lequel, dans le cas de la présence de la demande (AbA1) de mise hors circuit activée indépendamment de la commande de l'entraînement, on indique celle-ci au dispositif (70) de contrôle par le premier signal (S1) de demande, notamment sous la forme d'une valeur (S1.2) de signal parmi ses valeurs (S1.1, S1.2) de signal, et on applique à une deuxième entrée (70b) de signal du dispositif (70) de contrôle un deuxième signal (S2) de demande parmi les signaux (S1, S2) de demande, dans lequel, dans le cas de la présence de la demande (EinA2) de mise en circuit activée en fonction de la commande de l'entraînement, on indique celle-ci au dispositif (70) de contrôle par le deuxième signal (S2) de demande, notamment sous la forme d'une valeur (S2.1) de signal parmi ses valeurs (S2.1, S2.2) de signal.

12. Procédé suivant la revendication 11,
**caractérisé en ce que**
dans le cas de la présence de la demande (AbA2) de mise hors circuit activée en fonction de la commande de l'entraînement, on indique celle-ci au dispositif (70) de contrôle par le deuxième signal (S2) de demande, notamment sous la forme d'une autre valeur (S2.2) de signal parmi ses valeurs (S2.1, S2.2) de signal.

13. Procédé suivant l'une des revendications 9 à 12,
**caractérisé en ce que**,
le dispositif (60) de commande d'entraînement active sa demande (EinA2) de mise en circuit lorsqu'on lui indique, notamment par uns valeur (SBS.2) de signal de freinage rapide d'un signal (SBS) de freinage rapide appliqué ou par une information (SBI) de freinage rapide reçue avec un paquet de données, une demande (SBA, SBA') de freinage rapide, et
**en ce que** le dispositif (60) de commande de l'entraînement active, au lieu de sa demande (EinA2) de mise en circuit, sa demande (AbA2) de mise hors circuit si on ne lui indique pas la demande (SBA, SBA') de freinage rapide.

14. Procédé suivant l'une des revendications 11 à 13,
**caractérisé en ce que**
le dispositif (70) de contrôle sépare, par la mise hors circuit du dispositif (60) de commande de l'entraînement, celui-ci d'un dispositif (10) d'alimentation en énergie du véhicule et a, à cet effet, un trajet (71) d'alimentation ayant un point (71a) de connexion du côté de l'entrée au dispositif (10) d'alimentation en énergie et un point (71b) de connexion du côté de la sortie au dispositif (60) de commande de l'entraînement, ainsi que deux unités (75a, 76a) de coupure, montées en parallèle sur le cours du trajet (71) d'alimentation, de manière à interrompre le trajet (71) d'alimentation si les deux unités (75a, 76) de coupure sont ouvertes et à le fermer si au moins l'une des deux unités (75, 76) de coupure est fermée,
dans lequel on ouvre une première unité (75) de coupure parmi les deux unités (75, 76) de coupure sous l'effet du premier signal (S1) de demande si, au moyen du premier signal (S1) de demande, on indique la demande (AbA1) de mise hors circuit activée indépendamment de la commande de l'entraînement et on la ferme si l'on indique, au moyen du premier signal (S1) de demande, la demande (AEin1) de mise en circuit activée indépendamment de la commande de l'entraînement, et
dans lequel on ferme la deuxième unité (76) de coupure parmi les deux unités (75, 76) de coupure sous l'effet du deuxième signal (S2) de demande si, au moyen du deuxième signal (S2) de demande, on indique la demande (EinA2) de mise en circuit activée en fonction de la commande de l'entraînement et on l'ouvre si, au moyen du deuxième signal (S2) de demande, on indique la demande (AbA2) de mise hors circuit activée en fonction de la commande de l'entraînement.

15. Procédé suivant l'une des revendications 13 ou 14,
**caractérisé en ce que**
une unité (61) de commande du dispositif (60) de commande de l'entraînement active la demande (EinA2) de mise en circuit activée en fonction de la commande de l'entraînement et la donne à une unité (62) de sortie, pourvue d'une sortie (62c) de signal vers le dispositif (70) de contrôle, du dispositif (60) de commande de l'entraînement si on lui indique la demande (SBA, SBA') de freinage rapide, et
**en ce que** l'unité (62) de sortie transforme la demande (EinA2) de mise en circuit activée en fonction de la commande de l'entraînement en le deuxième signal (S2) de demande et la donne sur sa sortie (62c) de signal au dispositif (70) de contrôle, de manière à indiquer à celui-ci la demande (EinA2) de mise en circuit activée en fonction de la commande de l'entraînement par le deuxième signal (S2) de demande, notamment sous la forme de la valeur (S2.1) de signal.
